# EUROPÄISCHE PATENTSCHRIFT

(11) **EP 3 827 561 B1**
(45) Veröffentlichungstag und Bekanntmachung des Hinweises auf die Patenterteilung: **18.03.2026**
(21) Anmeldenummer: 19735213.1
(22) Anmeldetag: 27.06.2019
(51) Int. Cl.: H04L 12/40, H04L 12/403, B60R 16/02

(54) **EFFIZIENTE LEITUNGSTREIBERVORRICHTUNG ZUR DATENFLUSSKONTROLLE**
EFFICIENT LINE DRIVER DEVICE FOR DATA FLOW CONTROL
DISPOSITIF DE COMMANDE DE LIGNE EFFICACE POUR LE CONTRÔLE DE FLUX DE DONNÉES

(30) Priorität: 10.09.2018 DE 102018007143
(43) Veröffentlichungstag der Anmeldung: 02.06.2021
(73) Patentinhaber: INOVA Semiconductors GmbH, 81379 München (DE)
(72) Erfinder: NEUMANN, Roland, 81671 München (DE)
(74) Vertreter: Reich, Jochen
(86) Internationale Anmeldenummer: PCT/EP2019/025204
(87) Internationale Veröffentlichungsnummer: WO 2020/052806

(56) Entgegenhaltungen:
- DE-A1- 102007 044 820
- ANONYMOUS: "Duplex (Nachrichtentechnik) ? Wikipedia - Version vom 24. Juli 2018", 14 July 2018 (2018-07-14), XP055758186, Retrieved from the Internet <URL:https://de.wikipedia.org/w/index.php?title=Duplex_(Nachrichtentechnik)&oldid=179416233> [retrieved on 20201209]

## Beschreibung

Die vorliegende Erfindung ist auf eine Leitungstreibervorrichtung gerichtet, welche es beispielsweise in einer Systemanordnung zur Ansteuerung von Ausführungseinheiten ermöglicht, dass mit geringem technischem Aufwand ein erster oder zweiter Kommunikationspfad zum weiteren Datenfluss ausgewählt wird. Darüber hinaus ist die vorgeschlagene Leitungstreibervorrichtung besonders fehlertolerant und eignet sich u. a. für den Einsatz in einem Automobil. Die vorliegende Erfindung ist ferner gerichtet auf eine entsprechende Systemanordnung sowie auf ein Verfahren zum Betreiben bzw. Herstellen der Leitungstreibervorrichtung. Darüber hinaus wird ein Computerprogrammprodukt vorgeschlagen, mit Steuerbefehlen, welche das vorgeschlagene Verfahren ausführen bzw. die Leitungstreibervorrichtung herstellen bzw. betreiben.

DE 10 2007 044 820 A1 zeigt ein Bussystem mit mehreren in Serie geschalteten Busteilnehmern.

WO 2017/162 323 A1 zeigt eine effiziente Steuerungsanordnung und ein Steuerungsverfahren, wobei sequentiell angeordnete Ausführungseinheiten mittels einer Befehlseinheit angesteuert werden.

WO 2018/103 880 A1 zeigt eine kompakte Leuchtdiodenanordnung, welche generisch einsetzbar ist, jedoch aufgrund der kompakten Bauart insbesondere für die Verwendung in einem Fahrzeug vorteilhaft ist.

WO 2017/153 026 A1 zeigt ein Verfahren zur Helligkeitskompension in mindestens einer Leuchtdiode.

Gemäß herkömmlicher Verfahren ist eine Vielzahl von Möglichkeiten bekannt, Steuereinheiten, welche seriell geschaltet sind, anzusprechen. Hierbei gibt es generische Ansätze, welche jedoch in spezifischen Anwendungsszenarien nachteilig sein können oder aber auch sehr spezielle Ansätze, welche nunmehr nicht mehr in generischer Weise einsetzbar sind. Bekannt ist beispielsweise der sogenannte CAN-Bus, welcher bezüglich Kabelbäume entwickelt wurde und insbesondere eine Vernetzung von Steuergeräten umsetzen soll.

Allgemein ist die Komplexität des CAN Protokolls deutlich größer als bei ISELED (eingetragene Marke) und damit teurer. Aber der gewichtigste Nachteil von CAN und LIN ist, dass diese auf Grund der Busarchitektur keine natürliche (automatische) Adressierungsmöglichkeit bieten. Hier muss die Adresse konfiguriert werden. Bei ISELED (Ausführungseinheiten) und auch bei der segmentierten ISELED (Leitungstreibereinheit und Ausführungseinheiten) gibt es eine physikalisch vorgegebene Reihung und daraus folgt die eine Möglichkeit automatisch Adressen zu vergeben.

Aus dem Stand der Technik sind Systemanordnungen bekannt, welche dazu dienen, eine Mehrzahl von Ausführungseinheiten zu betreiben. Dies heißt, dass die entsprechenden Ausführungseinheiten mittels Steuerbefehlen angesprochen werden bzw. Daten aus diesen Ausführungseinheiten ausgelesen werden müssen. Bei dem sogenannten Daisy-Chaining werden Ausführungseinheiten in Serie geschaltet und mittels einzelner Befehlseinheiten angesprochen. Gerade bei einem Ausfall der Befehlseinheit, also nicht nur bei einem Ausfall einer Ausführungseinheit, kann es dazu kommen, dass weitergehende Fehlfunktionen auftreten.

Darüber hinaus ist es ein Problem, dass generell die Fehleranfälligkeit dadurch erhöht wird, dass mehrere Befehlseinheiten in Serie geschaltet werden. Somit besteht je ein serieller Kommunikationspfad lediglich erstens zwischen den einzelnen Befehlseinheiten und zweitens einer Vielzahl von Ausführungseinheiten. Dies führt dazu, dass der Datenfluss zu den weiteren Befehlseinheiten abgetrennt ist. Somit kommt das gesamte weitere System zum Erliegen.

Ferner stellt sich bei dem Anwendungsszenario im Automobil das Problem, dass verbaute Komponenten auf der einen Seite ausfallsicher sein müssen, auf der anderen Seite jedoch lediglich ein geringer technischer Aufwand betrieben werden kann, der zu einer Kostenreduktion führen muss. Somit muss also abgewogen werden zwischen einer Ausfallsicherheit und dem technischen Aufwand. Dies ist im Stand der Technik jedoch nachteilig, da weder der Kunde Abstriche bei der Fehleranfälligkeit akzeptiert, noch neigen Hersteller zu aufwändigen Schaltungen. Folglich besteht ein Bedarf an kosteneffizienten Komponenten, die dennoch ausfallsicher sind.

Somit ist es eine Aufgabe der vorliegenden Erfindung, eine Leitungstreibereinheit vorzuschlagen, welche sowohl effizient arbeitet als auch fehlertolerant ist. Eine solche Leitungstreibervorrichtung soll insbesondere ausfallsicher sein bzw. bei einem Ausfall keine weiteren Implikationen mit sich führen. Ferner ist es eine Aufgabe der vorliegenden Erfindung, eine Systemanordnung vorzuschlagen, in der die Leitungstreibervorrichtung vorteilhaft zum Einsatz kommt. Darüber hinaus soll ein Verfahren vorgeschlagen werden, welches die Leitungstreibervorrichtung bereitstellt bzw. betreibt. Auch ist es eine Aufgabe der vorliegenden Erfindung, ein Computerprogrammprodukt bereitzustellen, welches Steuerbefehle aufweist, welche die Leitungstreibervorrichtung herstellen bzw. betreiben und das vorgeschlagene Verfahren ausführen.

Die Aufgabe wird gelöst mit den Merkmalen der unabhängigen Patentansprüche. Weitere vorteilhafte Ausgestaltungen sind in den Unteransprüchen angegeben.

Demgemäß wird eine Leitungstreibervorrichtung zur effizienten und fehlertoleranten Datenflusskontrolle in einem Automobil vorgeschlagen, aufweisend eine erste Schnittstelleneinheit, eingerichtet zur Kommunikation mit einer Befehlseinheit oder einer weiteren Leitungstreibervorrichtung, eine zweite Schnittstelleneinheit, eingerichtet zur Kommunikation mit einer weiteren Leitungstreibervorrichtung, eine dritte Schnittstelleneinheit, eingerichtet zur Kommunikation mit einer Vielzahl von Ausführungseinheiten, wobei zwischen der ersten Schnittstelleneinheit und der zweiten Schnittstelleneinheit ein erster Kommunikationspfad angeordnet ist, und zwischen der ersten Schnittstelleneinheit, der zweiten Schnittstelleneinheit und der dritten Schnittstelleneinheit ein zweiter Kommunikationspfad angeordnet ist, wobei ein Transistor auf dem ersten Kommunikationspfad angeordnet ist und mittels einer Transistoransteuerung der Datenfluss über den ersten Kommunikationspfad oder den zweiten Kommunikationspfad umleitbar ist.

Bei einer Leitungstreibervorrichtung kann es sich beispielsweise um eine Vorrichtung handeln, welche in einer Systemanordnung vorgesehen ist und folglich mit weiteren Leitungstreibervorrichtungen kommuniziert. Generell ist eine Kommunikation mit weiteren Komponenten vorteilhaft, wobei diejenige Komponente die Leitungstreibervorrichtung ist, welche beispielsweise mit mehreren Ausführungseinheiten kommuniziert. Bei einer Ausführungseinheit handelt es sich um eine Komponente, welche Befehle umsetzt, die direkt oder indirekt von der Leitungstreibervorrichtung stammen. So kann eine Ausführungsvorrichtung bzw. Ausführungseinheit als eine Leuchtdiodeneinheit vorliegen, welche Leuchtdioden ansteuert. Leuchtdioden liegen typischerweise als rote, grüne oder blaue Leuchtdioden vor, wobei optional auch eine weiße Leuchtdiode vorgesehen werden kann.

Die Leitungstreibervorrichtung kommuniziert also mit mehreren Ausführungseinheiten und kann selbst eingerichtet sein, Befehle von einer weiteren Einheit, beispielsweise einer Befehlseinheit, zu erhalten. So kann eine Befehlseinheit als ein Mikrocontroller vorliegen, und die Leitungstreibervorrichtung kann ebenfalls als ein Mikrocontroller vorliegen oder generell einfach eine Einheit, welche Mittel zur Datenflusskontrolle vorhält und zudem zur Befehlsverarbeitung.

Typischerweise wird die Leitungstreibervorrichtung in Serie geschaltet, und es werden mehrere solche Leitungstreibervorrichtungen seriell entlang einer Datenleitung gekoppelt. Folglich liegen also typischerweise mehrere Leitungstreibervorrichtungen vor, welche mit einer Befehlseinheit verbunden sind. Eine erste in Serie geschaltete Leitungstreibervorrichtung ist direkt mit der Befehlseinheit gekoppelt, die weiteren Leitungstreibervorrichtungen sind indirekt mit der Befehlseinheit gekoppelt. Gemäß dem Stand der Technik besteht das Problem, dass bei einer seriellen Kopplung bei einem Ausfall einer Leitungstreibervorrichtung alle weiteren Leitungstreibervorrichtungen in der Serie ausfallen. Somit impliziert der Ausfall bzw. der inaktive Zustand einer Leitungstreibervorrichtung gemäß Stand der Technik, dass eine Mehrzahl weiterer Komponenten ausfällt. Dies wird erfindungsgemäß dadurch behoben, dass die vorgeschlagene Leitungstreibervorrichtung einen Kommunikationspfad bzw. einen Datenpfad vorhält, der Signale in einem inaktiven Zustand einfach durchschaltet.

Folglich werden auch bei einem Ausfallen einer einzigen Leitungstreibervorrichtung nicht die weiteren in Serie geschalteten Leitungstreibervorrichtungen vom Datenfluss ausgeschlossen, sondern vielmehr wird bei einem inaktiven Zustand einer Leitungstreibervorrichtung ein eingehendes Signal ohne jegliche Verarbeitung am Ausgang wieder ausgegeben. Dies wird im Folgenden als ein Durchleiten bzw. ein Durchschalten beschrieben.

Insgesamt ist also die vorgeschlagene Leitungstreibervorrichtung fehlertolerant, was sich insbesondere in einem Zusammenspiel mit weiteren Leitungstreibervorrichtungen niederschlägt. Die Leitungstreibervorrichtung kann an sich bereits als Systemanordnung beschrieben werden, und somit ist die Terminologie bezüglich der Leitungstreibervorrichtung auch dahingehend austauschbar, dass bereits hier von einer Systemanordnung gesprochen wird. Die vorgeschlagene Leitungstreibervorrichtung bezieht sich im Generellen auf strukturelle Merkmale, welche lediglich in der Leitungstreibervorrichtung selbst verbaut sind. Bezüglich externer Komponenten besitzt die Leitungstreibervorrichtung die Eigenschaft zur Kommunikation, was dahin führt, dass die vorgeschlagene Leitungstreibervorrichtung nicht anhand von externen Merkmalen beschrieben wird. Vielmehr eignet sich die Leitungstreibervorrichtung zur Einbettung in eine Systemanordnung, die auch weitere Komponenten aufweist.

Darüber hinaus ist die Leitungstreibervorrichtung auch effizient, da die Datenflusskontrolle mit einfachen technischen Mitteln implementiert wird. Gemäß einem Aspekt der vorliegenden Erfindung wird zur Datenflusskontrolle lediglich ein erster Kommunikationspfad und ein weiterer Kommunikationspfad benötigt, sowie ein Transistor. Bei den Datenleitungen bzw. den Kommunikationspfaden kann es sich um einzelne Leiterbahnen bzw. einfach elektrische Verbindungen handeln. Folglich ist die vorgeschlagene Leitungstreibervorrichtung auf einer einfachen Platine anzuordnen bzw. einstückig in einem Gehäuse zu verpacken.

Zur Kommunikation mit weiteren Vorrichtungen verfügt die Leitungstreibervorrichtung über mindestens drei Schnittstelleneinheiten. So agiert die erste Schnittstelleneinheit als eine Schnittstelle zur Kommunikation mit einer weiteren Leitungstreibervorrichtung. Auch ist diese Schnittstelle geeignet zur Kommunikation mit einer Befehlseinheit. Bei der Befehlseinheit handelt es sich um eine der Leitungstreibervorrichtung übergeordnete Instanz, welche Befehle an die Leitungstreibervorrichtung bereitstellt. Folglich kann also die Befehlseinheit als eine Master-Einheit bezüglich der Leitungstreibervorrichtung agieren, welche sodann als Slave-Einheit bzw. Client-Einheit agiert.

Die zweite Schnittstelleneinheit kann analog der ersten Schnittstelleneinheit ausgeprägt sein und ist zumindest geeignet zur Kommunikation mit einer weiteren Leitungstreibereinheit bzw. Leitungstreibervorrichtung. So kann beispielsweise die erste Schnittstelleneinheit als ein Eingang der Leitungstreibervorrichtung bezeichnet werden und die zweite Schnittstelle als ein Ausgang. Die Leitungstreibervorrichtung kann jedoch auch bidirektional mit weiteren Vorrichtungen, beispielsweise der Befehlsvorrichtung bzw. einer weiteren Leitungstreibervorrichtung, gekoppelt sein, wodurch auch eine bidirektionale Kommunikation ermöglicht wird und folglich die zweite Schnittstelleneinheit als ein Eingang vorliegt und die erste Schnittstelleneinheit als ein Ausgang. Folglich können die beiden Schnittstelleneinheiten je nach Kommunikationsrichtungen die Rolle eines Ausgangs bzw. eines Eingangs übernehmen.

Die dritte Schnittstelleneinheit dient der Kommunikation mit Ausführungseinheiten, welche beispielsweise seriell gekoppelt werden können. So dient die dritte Kommunikationsschnittstelle bzw. Schnittstelleneinheit der Kommunikation mit weiteren externen Komponenten, wobei sich die Leitungstreibervorrichtung bezüglich dieser weiteren Komponenten als Master-Einheit verhält. Die mittels der dritten Schnittstelleneinheit gekoppelten Komponenten können als Ausführungseinheiten bezeichnet werden, welche Befehle entgegennehmen und diese ausführen. Darüber hinaus ist es möglich, dass die Schnittstelleneinheit ausgerichtet ist, Rückgabewerte von diesen Ausführungseinheiten entgegenzunehmen.

Zwischen der ersten Schnittstelleneinheit und der zweiten Schnittstelleneinheit ist ein erster Kommunikationspfad angeordnet. Dieser Kommunikationspfad verbindet beide Schnittstellen und dient der Übermittlung von Signalen. Auf diesem Kommunikationspfad, welcher beispielsweise als Datenleitung implementiert ist, können weitere Komponenten angeordnet sein, wie beispielsweise eine Transistoreinheit. Folglich muss der Kommunikationspfad nicht durchgängig von der ersten Schnittstelleneinheit an die zweite Schnittstelleneinheit verlaufen, sondern kann indirekt Daten von der ersten Schnittstelleneinheit an die zweite Schnittstelleneinheit übermitteln, wobei auch Zwischenkomponenten verbaut sein können.

Zwischen der ersten Schnittstelleneinheit, der zweiten Schnittstelleneinheit und der dritten Schnittstelleneinheit ist ein zweiter Kommunikationspfad angeordnet, welcher ebenfalls direkt oder indirekt die Schnittstelleneinheiten verbinden kann. Typischerweise ist es vorteilhaft, den Kommunikationspfad derart auszugestalten, dass dieser die erste Schnittstelleneinheit mit der dritten Schnittstelleneinheit verbindet und sodann die dritte Schnittstelleneinheit mit der zweiten Schnittstelleneinheit verbindet. Folglich ist der zweite Kommunikationspfad dem ersten Kommunikationspfad analog ausgestaltet, wobei dem zweiten Kommunikationspfad noch die dritte Schnittstelleneinheit angeordnet ist. Der zweite Kommunikationspfad kann ebenfalls weitere Komponenten umfassen, wie beispielsweise Empfängerbausteine bzw. Senderbausteine.

Bei der zweiten Datenleitung bzw. dem zweiten Kommunikationspfad ist es lediglich ein Aspekt der vorliegenden Erfindung, dass dieser die erste Schnittstelleneinheit mit der dritten Schnittstelleneinheit und die dritte Schnittstelleneinheit mit der zweiten Schnittstelleneinheit kommunikativ koppelt. Insofern kann sich die Anordnung zwischen den Schnittstelleneinheiten auch darauf beziehen, dass strukturell eine andere Bauart gewählt wird, wobei die logische Kommunikation zwischen den vorgeschlagenen Schnittstelleneinheiten verläuft.

Darüber hinaus kann auf dem zweiten Kommunikationspfad eine Verarbeitungseinheit angeordnet werden, welche die eingehenden Signale verarbeitet und sodann wieder ausgibt. Der Fachmann erkennt hierbei, dass zur technischen Umsetzung weitere Komponenten verbaut sein können.

Der erste Kommunikationspfad weist einen Transistor auf.

Der Transistor dient zur Einstellung des Kommunikationspfads, wobei generell zwischen dem ersten und dem zweiten Kommunikationspfad gewählt werden kann. Liegt an der Leitungstreibervorrichtung ein Strom an, so werden Datensignale empfangen, es folgt eine Verarbeitung der entsprechenden Signale in der internen Logikeinheit und anschließend ein Senden der verarbeiteten Signale. Dies entspricht dem zweiten Kommunikationspfad. Liegt hingegen keine Spannung an, so erfolgt ein analoges Durchleiten, was dem ersten Kommunikationspfad entspricht.

Auf diese Weise wird auch der Fehlerfall behandelt, nämlich die Situation, wenn die Leitungstreibervorrichtung defekt ist bzw. deaktiviert wurde. In diesem Fall ist der Transistor geschlossen (selbstleitender Transistor) und es besteht ein durchleitender Pfad. Somit werden also in einem aktiven Zustand der Leitungstreibervorrichtung die eingehenden Signale verarbeitet und sodann wieder ausgegeben. In einem deaktivierten Zustand erfolgt lediglich ein passives Durchleiten. Ein aktives Durchleiten über den zweiten Kommunikationspfad impliziert hierbei eine Datenverarbeitung, was dem aktiven Zustand der Leitungstreibervorrichtung entspricht.

Für die weiteren Komponenten ist die Leitungstreibervorrichtung nicht sichtbar, wenn keine Spannung anliegt. Folglich schaltet sich die Leitungstreibervorrichtung passiv, falls diese ausfällt, und leitet dennoch Signale passiv hindurch, ohne also weitere Komponenten zu beeinträchtigen. Keine Spannung liegt an der Leitungstreibervorrichtung an, falls diese nicht betrieben wird bzw. kaputt ist, und somit erfolgt ein passives Durchschalten von Signalen.

Gemäß einem weiteren Aspekt der vorliegenden Erfindung ist die dritte Schnittstelleneinheit eingerichtet zur Kommunikation mit in Serie schaltbaren Ausführungseinheiten. Dies hat den Vorteil, dass die Schnittstelleneinheit mit diversen Ausführungseinheiten kommuniziert, was jeweils nicht direkt erfolgen muss. Vielmehr ist es möglich, dass die Vielzahl von Ausführungseinheiten in Serie geschaltet ist und somit die Leitungstreibervorrichtung vorzugsweise über die dritte Schnittstelleneinheit mit einer einzelnen Ausführungseinheit direkt kommuniziert und indirekt mit den weiteren angeschlossenen Ausführungseinheiten. Generell kann die dritte Schnittstelleneinheit Befehle an die weiteren Ausführungseinheiten übermitteln bzw. Rückgabewerte entgegennehmen.

Gemäß einem weiteren Aspekt der vorliegenden Erfindung ist die Transistoransteuerung mittels einer angelegten elektrischen Spannung oder einem elektrischen Strom durchführbar. Dies hat den Vorteil, dass die Transistoransteuerung als Schaltung agiert und den ersten oder zweiten Kommunikationspfad auswählen kann. Somit wird eine technisch einfache aber effiziente Struktur zur Auswahl des Kommunikationspfads geschaffen.

Generell ist es möglich, dass der erste Kommunikationspfad und der zweite Kommunikationspfad nicht separat voneinander implementiert werden, sondern vielmehr können sich die Kommunikationspfade teilüberlappen. Somit ist es möglich, in struktureller Form lediglich eine Kommunikationsleitung bereitzustellen, wobei die Transistorstellung einstellt, ob der erste logische Pfad oder der zweite logische Pfad gewählt wird.

Gemäß einem weiteren Aspekt der vorliegenden Erfindung ist der dritten Schnittstelleneinheit eine Logikeinheit vorgeschaltet. Dies hat den Vorteil, dass eingehende Kommunikationssignale bzw. Befehle mittels des zweiten Kommunikationspfads durch die Logikeinheit hindurchgeführt werden können und hierbei verarbeitet werden können. Folglich befindet sich auf dem zweiten Kommunikationspfad eine Logikeinheit, welche Signale verarbeitet. Sodann können die bearbeiteten Signale entweder mittels der dritten Schnittstelleneinheit an die Ausführungseinheiten ausgegeben werden oder aber auch an den Ausgang, also die zweite Schnittstelleneinheit, angelegt werden.

Gemäß einem weiteren Aspekt der vorliegenden Erfindung steuert die Logikeinheit die zweite Schnittstelleneinheit und/oder die dritte Schnittstelleneinheit an. Dies hat den Vorteil, dass entweder eine oder zwei weitere Einheiten mit den entsprechenden Befehlen bzw. verarbeiteten Signalen beaufschlagt werden können. Somit ist es möglich, dass die Logikeinheit einen Befehl ausgibt, der an die Vielzahl von Ausführungseinheiten übermittelt wird.

Gemäß einem weiteren Aspekt der vorliegenden Erfindung liegt der Transistor als Feldeffekttransistor vor. Dies hat den Vorteil, dass ein vorhandener Baustein in einem neuen Kontext eingesetzt werden kann und die Schaltung besonders einfach implementiert werden kann. Zudem wird eine vorteilhafte Alternative zu bekannten Schaltern vorgeschlagen.

Gemäß einem weiteren Aspekt der vorliegenden Erfindung liegt der Transistor als ein selbstleitender Feldeffekttransistor vor. Dies hat den Vorteil, dass eine Anordnung vorgeschlagen wird, welche lediglich eine geringe Anzahl von Komponenten umfasst und somit effizient und fehlerrobust ist.

Gemäß einem weiteren Aspekt der vorliegenden Erfindung wird bei einem inaktiven Zustand der Leitungstreibervorrichtung der erste Kommunikationspfad derart eingestellt, dass Signale, welche an der ersten Schnittstelleneinheit anliegen ohne Verarbeitung an der zweiten Schnittstelleneinheit auszugeben sind. Dies hat den Vorteil, dass bei einem Ausfall einer Leitungstreibervorrichtung die Leitungstreibervorrichtung deaktiviert wird, ohne hierbei den weiteren Kommunikationsfluss zu unterbrechen.

Gemäß einem weiteren Aspekt der vorliegenden Erfindung liegt der erste Kommunikationspfad als ein passiver Kommunikationspfad vor. Dies hat den Vorteil, dass der Kommunikationspfad bei einem Deaktivieren der Leitungstreibervorrichtung lediglich die Signale passiv durchleitet und somit eine defekte Leitungstreibervorrichtung für weitere Komponenten ohne Einfluss ist. Insbesondere beeinträchtigt die deaktivierte bzw. defekte Leitungstreibervorrichtung nicht den weiteren Kommunikationsfluss, sondern vielmehr erfolgt ein Durchreichen des Signals über den passiven Kommunikationspfad.

Gemäß einem weiteren Aspekt der vorliegenden Erfindung liegt der zweite Kommunikationspfad als ein aktiver Kommunikationspfad vor. Dies hat den Vorteil, dass in einem Normalfall, also bei einem Betreiben der Leitungstreibervorrichtung, der Kommunikationspfad aktiv eingestellt wird, und sodann der zweite Kommunikationspfad dazu benutzt wird, die Signale zu verarbeiten. Hierzu kann vorzugsweise eine Logikeinheit vorgesehen sein.

Gemäß einem weiteren Aspekt der vorliegenden Erfindung ist die Leitungstreibervorrichtung einstückig ausgeformt. Dies hat den Vorteil, dass die Leitungstreibervorrichtung besonders gut in einer Systemanordnung zu verbauen ist und beispielsweise auf einer einzelnen Platine angeordnet werden kann bzw. in einem einzelnen Gehäuse verbaut werden kann. Somit kann die Leitungstreibervorrichtung einzeln bereitgestellt werden und sodann in weiteren Verarbeitungsschritten verbaut werden.

Die Aufgabe wird auch gelöst durch eine Systemanordnung mit einer Leitungstreibervorrichtung, wie sie bereits beschrieben wird.

Die Aufgabe wird auch gelöst durch ein Verfahren zur effizienten und fehlertoleranten Datenflusskontrolle in einem Automobil, aufweisend ein Bereitstellen einer ersten Schnittstelleneinheit eingerichtet zur Kommunikation mit einer Befehlseinheit oder einer weiteren Leitungstreibervorrichtung, ein Bereitstellen einer zweiten Schnittstelleneinheit eingerichtet zur Kommunikation mit einer weiteren Leitungstreibervorrichtung, ein Bereitstellen einer dritten Schnittstelleneinheit eingerichtet zur Kommunikation mit einer Vielzahl von Ausführungseinheiten, wobei zwischen der ersten Schnittstelleneinheit und der zweiten Schnittstelleneinheit ein erster Kommunikationspfad angeordnet wird und zwischen der ersten Schnittstelleneinheit, der zweiten Schnittstelleneinheit und der dritten Schnittstelleneinheit ein zweiter Kommunikationspfad angeordnet wird, wobei ein Transistor (T) auf dem ersten Kommunikationspfad angeordnet wird und mittels einer Transistoransteuerung der Datenfluss über den ersten Kommunikationspfad oder den zweiten Kommunikationspfad umgeleitet wird.

Der Fachmann erkennt hierbei, dass die einzelnen Verfahrensschritte iterativ und/oder in anderer Reihenfolge ausgeführt werden können. Insbesondere können einzelne Verfahrensschritte Unterschritte aufweisen.

Die Aufgabe wird auch gelöst durch ein Computerprogrammprodukt mit Steuerbefehlen, welche das vorgeschlagene Verfahren betreiben bzw. die vorgeschlagene Leitungstreibervorrichtung betreiben bzw. herstellen.

Erfindungsgemäß ist es besonders vorteilhaft, dass das Verfahren Verfahrensschritte bereitstellt, welche funktional auch durch die strukturellen Merkmale der Leitungstreibervorrichtung nachgebildet werden können. Die Leitungstreibervorrichtung bzw. die Systemanordnung stellen strukturelle Merkmale bereit, welche geeignet sind, das Verfahren auszuführen.

Weitere vorteilhafte Ausgestaltungen werden anhand der beigefügten Figuren näher erläutert. Es zeigen:
- Fig. 1:: eine schematische Anordnung mit einer Befehlseinheit und mehreren in Serie geschalteten Ausführungseinheiten gemäß dem Stand der Technik;
- Fig. 2:: ein Blockdiagramm mit einer Leitungstreibervorrichtung zur effizienten und fehlertoleranten Datenflusskontrolle gemäß einem Aspekt der vorliegenden Erfindung; und
- Fig. 3:: ein schematisches Ablaufdiagramm eines Verfahrens zur effizienten und fehlertoleranten Datenflusskontrolle gemäß einem weiteren Aspekt der vorliegenden Erfindung.

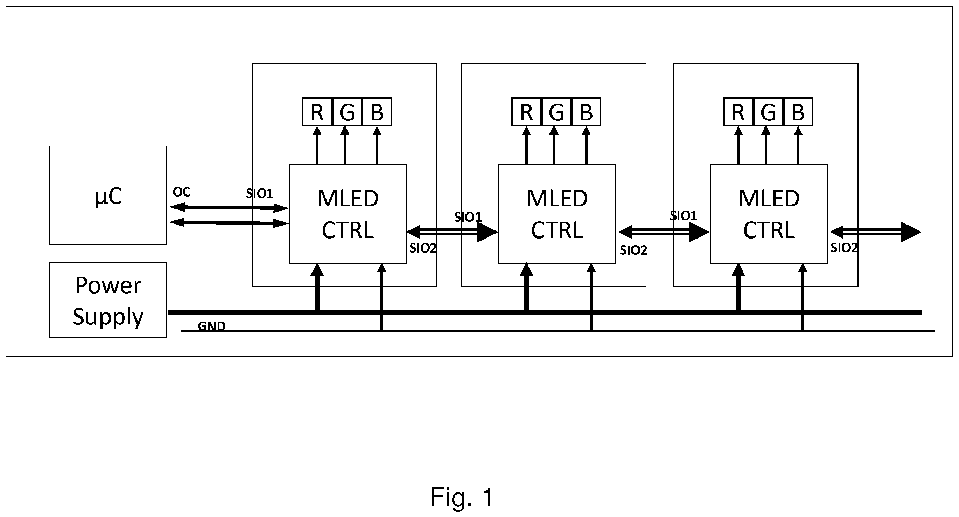

Fig. 1 zeigt auf der linken Seite einen Mikrocontroller, welcher beispielsweise als Befehlseinheit agiert. Darüber hinaus sind mittels einer bidirektionalen Kommunikation mehrere Ausführungseinheiten angeordnet, welche vorliegend als LED-Controller implementiert sind. Dies wird durch das Bezugszeichen MLED CTRL gezeigt. Der Stand der Technik weist bezüglich mancher Anwendungsszenarien den Nachteil auf, dass mit dem Ausfall eines Controllers alle weiteren in Serie geschalteten Controller ebenfalls ausfallen, da die Kommunikation unterbunden ist.

Fig. 1 zeigt eine mögliche Ausgestaltung eines Systems bzw. der Kommunikationsanordnung gemäß Stand der Technik. So ist vorliegend auf der linken Seite die Befehlseinheit BE ersichtlich, welche an drei Steuereinheiten angeschlossen ist. Da die drei Steuereinheiten in Serie geschaltet sind, ist die Befehlseinheit mit einer Steuereinheit direkt verbunden und den weiteren Steuereinheiten indirekt verbunden. Bei den Steuereinheiten kann es sich um sogenannte Multi-LED-Controller handeln. Dies ist in der vorliegenden Fig. 1 als MLED CTRL eingezeichnet. Durch das einheitliche Bezugszeichen soll insbesondere verdeutlicht werden, dass die Steuereinheiten typischerweise gleich ausgestaltet sind. Wie vorliegend ersichtlich ist, handelt es sich bei den Leuchtdioden um RGB- (also rot, grün, blau) Leuchtdioden. Diese sind hierbei eingerichtet, einen bestimmten Farbwert mittels eines Mischverhältnisses der einzelnen Leuchtdiodeneinheiten einzustellen. Ferner ist in der vorliegenden Figur ersichtlich, dass weitere Komponenten je nach Bedarf vorzusehen sind. Beispielsweise kann es notwendig sein, eine Stromzufuhr bereitzustellen. Hierbei ist es jedoch auch möglich, diese Komponenten, beispielsweise die Stromzufuhr, extern bereitzustellen und lediglich anzuschließen.

Die Datenleitung ist vorliegend als Mehrzahl von Datenleitungssegmenten vorhanden, welche als bidirektionale Pfeile SIO1, SIO2 eingezeichnet sind. Steuereinheiten können auch als Ausführungseinheiten bezeichnet werden.

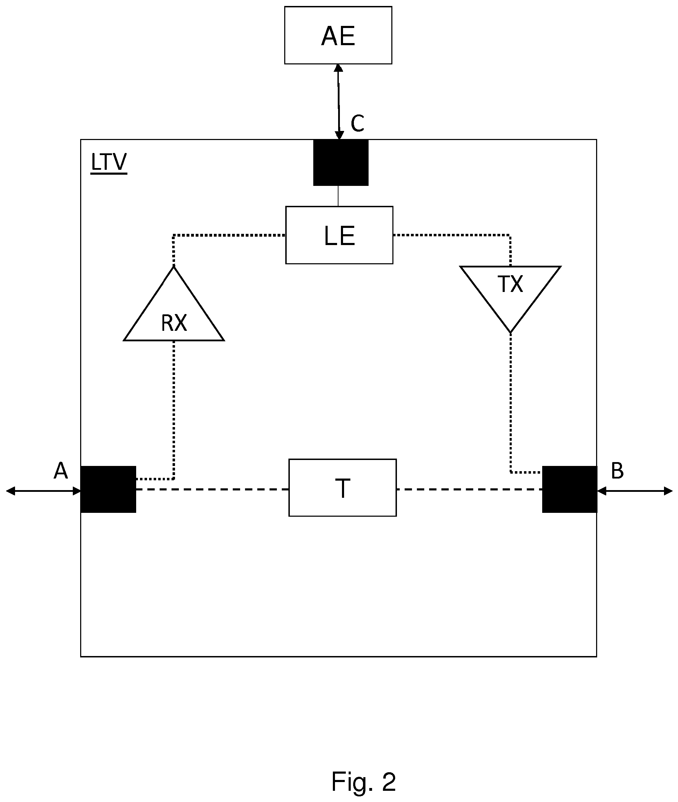

Fig. 2 zeigt die erfindungsgemäße Leitungstreibervorrichtung LTV. Wie vorliegend gezeigt, sind drei Schnittstelleneinheiten vorgesehen, nämlich die erste Schnittstelleneinheit A, die zweite Schnittstelleneinheit B sowie die dritte Schnittstelleneinheit C. Vor der dritten Schnittstelleneinheit C ist zudem eine Logikeinheit LE vorgeschaltet. Die dritte Schnittstelleneinheit C ist eingerichtet, mit einer Vielzahl von weiteren Ausführungseinheiten AE zu kommunizieren. Darüber hinaus können weitere Komponenten zu verbauen sein, wie beispielsweise ein Empfänger Rx sowie ein Sender Tx. Hierbei steht R für Receiver und T für Transmitter.

Der erste Kommunikationspfad ist mittels einer gestrichelten Linie eingezeichnet und verbindet die erste Schnittstelleneinheit A mit der zweiten Schnittstelleneinheit B. Dies erfolgt indirekt, wobei der Transistor T dazwischen angeordnet ist. Die zweite Datenleitung ist mit der gepunkteten Linie eingezeichnet und verläuft zwischen der ersten Schnittstelleneinheit A, der zweiten Schnittstelleneinheit B über die dritte Schnittstelleneinheit C. Der dritten Schnittstelleneinheit ist die Logikeinheit LE vorgeschaltet, welche sich ebenfalls auf der zweiten Datenleitung befindet.

Die erste Datenleitung, also die gestrichelte Datenleitung, und die zweite Datenleitung, also die gepunktete Datenleitung, können derart ausgestaltet werden, dass zumindest das erste Teilstück gemeinsam implementiert wird. Sodann wird in diese Datenleitung sowohl der erste Kommunikationspfad als auch der zweite Kommunikationspfad eingekoppelt. Physisch kann insgesamt ein einziges Leitungssystem vorliegen, wobei der Transistor einstellt, ob der erste logische Kommunikationspfad oder der zweite logische Kommunikationspfad gewählt wird. Die entsprechenden Signale fließen dann also entweder horizontal von der ersten Schnittstelleneinheit A über den Transistor an die zweite Schnittstelleneinheit B. Ebenso kann alternativ die zweite Datenleitung gewählt werden, welche dann über die dritte Schnittstelleneinheit C verläuft.

Weitere Leitungstreibervorrichtungen LTV können entweder links angeordnet werden und/oder rechts, und somit können diese mittels der Schnittstelleneinheiten A oder B kommunizieren. Ebenso ist es möglich, dass in der vorliegenden Fig. 2 oben mehrere Ausführungseinheiten AE vorgesehen sind, welche in Serie geschaltet sind. Die Systemanordnung, welche erfindungsgemäß vorgeschlagen wird, kann somit nicht lediglich eine Leitungstreibervorrichtung LTV umfassen, sondern mehrere, welche in Serie geschaltet sind, sowie mehrere Ausführungseinheiten AE, welche ebenfalls in Serie zu schalten sind. Zudem kann eine Befehlseinheit vorgesehen sein, welche beispielsweise mittels der Schnittstelle A mit der Leitungstreibervorrichtung LTV kommuniziert. Eine solche Befehlseinheit kann als Mikrocontroller implementiert werden.

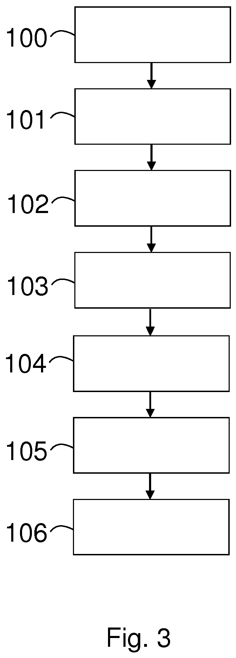

Fig. 3 zeigt in einem schematischen Ablaufdiagramm das vorgeschlagene Verfahren zur effizienten und fehlertoleranten Datenflusskontrolle in einem Automobil, aufweisend ein Bereitstellen 100 einer ersten Schnittstelleneinheit A eingerichtet zur Kommunikation mit einer Befehlseinheit BE oder einer weiteren Leitungstreibervorrichtung LTV. Ein Bereitstellen 101 einer zweiten Schnittstelleneinheit B eingerichtet zur Kommunikation mit einer weiteren Leitungstreibervorrichtung LTV, ein Bereitstellen 102 einer dritten Schnittstelleneinheit C eingerichtet zur Kommunikation mit einer Vielzahl von Ausführungseinheiten AE, wobei zwischen der ersten Schnittstelleneinheit A und der zweiten Schnittstelleneinheit B ein erster Kommunikationspfad angeordnet wird 103 und zwischen der ersten Schnittstelleneinheit A, der zweiten Schnittstelleneinheit B und der dritten Schnittstelleneinheit C ein zweiter Kommunikationspfad angeordnet wird 104, wobei ein Transistor (T) auf dem ersten Kommunikationspfad angeordnet wird 105 und mittels einer Transistoransteuerung der Datenfluss über den ersten Kommunikationspfad oder den zweiten Kommunikationspfad umgeleitet 106 wird.

Der Fachmann erkennt hierbei, dass die einzelnen Verfahrensschritte iterativ und/oder in anderer Reihenfolge ausgeführt werden und Unterschritte aufweisen können.

## Patentansprüche

1. Systemanordnung mit einer Leitungstreibervorrichtung (LTV) und einer Vielzahl von Ausführungseinheiten (AE) zur effizienten und fehlertoleranten Datenflusskontrolle in einem Automobil, aufweisend:
- eine erste Schnittstelleneinheit (A) eingerichtet zur Kommunikation mit einer Befehlseinheit oder einer ersten weiteren Leitungstreibervorrichtung (LTV);
- eine zweite Schnittstelleneinheit (B) eingerichtet zur Kommunikation mit einer zweiten weiteren Leitungstreibervorrichtung (LTV);
- eine dritte Schnittstelleneinheit (C) eingerichtet zur Kommunikation mit einer Vielzahl von Ausführungseinheiten (AE), wobei zwischen der ersten Schnittstelleneinheit (A) und der zweiten Schnittstelleneinheit (B) ein erster Kommunikationspfad angeordnet ist und zwischen der ersten Schnittstelleneinheit (A), der zweiten Schnittstelleneinheit (B) und der dritten Schnittstelleneinheit (C) ein zweiter Kommunikationspfad angeordnet ist, **dadurch gekennzeichnet, dass** ein erster und ein zweiter Transistor (T) auf dem ersten Kommunikationspfad angeordnet ist und mittels einer Transistoransteuerung der Datenfluss über den ersten Kommunikationspfad bei geschlossenem Transistor (T) für eine jeweilige Kommunikationsrichtung oder den zweiten Kommunikationspfad bei geöffnetem Transistor (T) für die jeweilige Kommunikationsrichtung umleitbar ist, wobei die Leitungstreibervorrichtung (LTV) zur bidirektionalen Kommunikation mit weiteren Vorrichtungen eingerichtet ist und für eine erste Kommunikationsrichtung auf dem ersten Kommunikationspfad der erste Transistor verwendet wird und für eine zweite Kommunikationsrichtung auf dem ersten Kommunikationspfad der zweite Transistor verwendet wird, wobei die Transistoransteuerung mittels einer angelegten elektrischen Spannung oder einem elektrischen Strom durchführbar ist, wobei die Transistoransteuerung als Schaltung agiert und den ersten oder zweiten Kommunikationspfad auswählt.

2. Systemanordnung nach Anspruch 1, **dadurch gekennzeichnet, dass** die dritte Schnittstelleneinheit (C) eingerichtet ist zur Kommunikation mit in Serie schaltbarer Ausführungseinheiten (AE).

3. Systemanordnung nach einem der vorhergehenden Ansprüche, **dadurch gekennzeichnet, dass** der dritten Schnittstelleneinheit (C) eine Logikeinheit (LE) auf dem zweiten Kommunikationspfad vorgeschaltet ist.

4. Systemanordnung nach Anspruch 3 , **dadurch gekennzeichnet, dass** die Logikeinheit (LE) die zweite Schnittstelleneinheit (B) und/oder die dritte Schnittstelleneinheit (C) ansteuert.

5. Systemanordnung nach einem der vorhergehenden Ansprüche, **dadurch gekennzeichnet, dass** der Transistor (T) als Feldeffekttransistor vorliegt.

6. Systemanordnung nach Anspruch 5, **dadurch gekennzeichnet, dass** der Transistor (T) als ein selbstleitender Feldeffekttransistor vorliegt.

7. Systemanordnung nach einem der vorhergehenden Ansprüche, **dadurch gekennzeichnet, dass** bei einem inaktiven Zustand der Leitungstreibervorrichtung (LTV) der erste Kommunikationspfad derart eingestellt wird, dass Signale, welche an der ersten Schnittstelleneinheit (A) anliegen ohne Verarbeitung an der zweiten Schnittstelleneinheit (B) auszugeben sind.

8. Systemanordnung nach einem der vorhergehenden Ansprüche, **dadurch gekennzeichnet, dass** der zweite Kommunikationspfad als ein aktiver Kommunikationspfad vorliegt.

9. Systemanordnung nach einem der vorhergehenden Ansprüche, **dadurch gekennzeichnet, dass** die Leitungstreibervorrichtung (LTV) einstückig ausgeformt ist.

10. Systemanordnung nach einem der vorhergehenden Ansprüche, die Systemanordnung zur Verwendung in einem Automobil.

11. Automobil aufweisend eine Systemanordnung nach Anspruch 10.

12. Verfahren zur effizienten und fehlertoleranten Datenflusskontrolle in einem Automobil, aufweisend:
- Bereitstellen (100) einer ersten Schnittstelleneinheit (A) eingerichtet zur Kommunikation mit einer Befehlseinheit oder einer ersten weiteren Leitungstreibervorrichtung (LTV);
- Bereitstellen (101) einer zweiten Schnittstelleneinheit (B) eingerichtet zur Kommunikation mit einer zweiten weiteren Leitungstreibervorrichtung (LTV);
- Bereitstellen (102) einer dritten Schnittstelleneinheit (C) eingerichtet zur Kommunikation mit einer Vielzahl von Ausführungseinheiten (AE), wobei zwischen der ersten Schnittstelleneinheit (A) und der zweiten Schnittstelleneinheit (B) ein erster Kommunikationspfad angeordnet wird (103) und zwischen der ersten Schnittstelleneinheit (A), der zweiten Schnittstelleneinheit (B) und der dritten Schnittstelleneinheit (C) ein zweiter Kommunikationspfad angeordnet wird (104), **dadurch gekennzeichnet, dass** ein erster und ein zweiter Transistor (T) auf dem ersten Kommunikationspfad angeordnet wird (105) und mittels einer Transistoransteuerung der Datenfluss über den ersten Kommunikationspfad bei geschlossenem Transistor (T) für eine jeweilige Kommunikationsrichtung oder den zweiten Kommunikationspfad bei geöffnetem Transistor (T) für eine jeweilige Kommunikationsrichtung umgeleitet (106) wird, wobei die Leitungstreibervorrichtung (LTV) zur bidirektionalen Kommunikation mit weiteren Vorrichtungen eingerichtet ist und für eine erste Kommunikationsrichtung auf dem ersten Kommunikationspfad der erste Transistor verwendet wird und für eine zweite Kommunikationsrichtung auf dem ersten Kommunikationspfad der zweite Transistor verwendet wird, wobei die Transistorsteuerung mittels einer angelegten elektrischen Spannung oder einem elektrischen Strom durchgeführt wird, wobei die Transistoransteuerung als Schaltung agiert und den ersten oder zweiten Kommunikationspfad auswählt.

13. Computerprogrammprodukt mit Steuerbefehlen, welche das Verfahren gemäß Anspruch 12 ausführen, wenn sie auf einem Computer zur Ausführung gebracht werden.

## Claims

1. A system arrangement with a line driver device (LTV) and a plurality of execution units (AE) for efficient and fault-tolerant data flow control in an automobile, comprising:
- a first interface unit (A) set up for communication with a command unit or a first further line driver device (LTV);
- a second interface unit (B) set up for communication with a second further line driver device (LTV);
- a third interface unit (C) set up for communication with a plurality of execution units (AE), wherein a first communication path is arranged between the first interface unit (A) and the second interface unit (B) and a second communication path is arranged between the first interface unit (A), the second interface unit (B) and the third interface unit (C), **characterised in that** a first and a second transistor (T) are arranged on the first communication path and the data flow can be redirected via the first communication path when the transistor (T) is closed for a respective communication direction or the second communication path when the transistor (T) is open for the respective communication direction by means of a transistor control, wherein the line driver device (LTV) is set up for bidirectional communication with further devices and the first transistor is used for a first communication direction on the first communication path and the second transistor is used for a second communication direction on the first communication path, wherein the transistor control can be carried out by means of an applied electrical voltage or an electrical current , wherein the transistor control acts as a circuit and selects the first or second communication path.

2. The system arrangement according to claim 1, **characterised in that** the third interface unit (C) is set up for communication with series-connectable execution units (AE).

3. The system arrangement according to one of the preceding claims, **characterised in that** a logic unit (LE) is connected upstream of the third interface unit (C) on the second communication path.

4. The system arrangement according to claim 3, **characterised in that** the logic unit (LE) controls the second interface unit (B) and/or the third interface unit (C).

5. The system arrangement according to one of the preceding claims, **characterised in that** the transistor (T) is present as a field-effect transistor.

6. The system arrangement according to claim 5, **characterised in that** the transistor (T) is present as a self-conducting field-effect transistor.

7. The system arrangement according to one of the preceding claims, **characterised in that**, when the line driver device (LTV) is inactive, the first communication path is set such that signals which are present at the first interface unit (A) are to be output at the second interface unit (B) without processing.

8. The system arrangement according to one of the preceding claims, **characterised in that** the second communication path is present as an active communication path.

9. The system arrangement according to one of the preceding claims, **characterised in that** the line driver device (LTV) is formed in one piece.

10. The system arrangement according to one of the preceding claims, the system arrangement for use in an automobile.

11. An automobile comprising a system arrangement according to claim 10.

12. A method for efficient and fault-tolerant data flow control in an automobile, comprising:
- providing (100) a first interface unit (A) adapted to communicate with a command unit or a first further line driver device (LTV);
- providing (101) a second interface unit (B) adapted to communicate with a second further line driver device (LTV);
- providing (102) a third interface unit (C) arranged to communicate with a plurality of execution units (AE), wherein a first communication path is arranged (103) between the first interface unit (A) and the second interface unit (B) and a second communication path is arranged (104) between the first interface unit (A), the second interface unit (B) and the third interface unit (C), **characterised in that** a first and a second transistor (T) are arranged on the first communication path (105) and the data flow is diverted (106) via the first communication path when the transistor (T) is closed for a respective communication direction or the second communication path when the transistor (T) is open for a respective communication direction by means of a transistor control, wherein the line driver device (LTV) is arranged for bidirectional communication with further devices and the first transistor is used for a first communication direction on the first communication path and the second transistor is used for a second communication direction on the first communication path, wherein the transistor control is performed by means of an applied electric voltage or an electric current, wherein the transistor control acts as a circuit and selects the first or second communication path.

13. A computer program product comprising control instructions which perform the method of claim 12 when executed on a computer.

## Revendications

1. Système comprenant un dispositif de commande de ligne (LTV) et une pluralité d'unités d'exécution (AE) pour un contrôle de flux de données efficace et tolérant aux pannes dans une automobile, comprenant :
- une première unité d'interface (A) conçue pour communiquer avec une unité de commande ou un premier autre dispositif de commande de ligne (LTV) ;
- une deuxième unité d'interface (B) agencée pour communiquer avec un deuxième autre dispositif de commande de ligne (LTV) ;
- une troisième unité d'interface (C) agencée pour communiquer avec une pluralité d'unités d'exécution (AE), un premier chemin de communication étant disposé entre la première unité d'interface (A) et la deuxième unité d'interface (B) et un deuxième chemin de communication étant disposé entre la première unité d'interface (A), la deuxième unité d'interface (B) et la troisième unité d'interface (C), **caractérisé en ce qu'**un premier et un deuxième transistor (T) sont disposés sur le premier chemin de communication et, au moyen d'une commande de transistor, le flux de données peut être dévié par le premier chemin de communication lorsque le transistor (T) est fermé pour une direction de communication respective ou par le deuxième chemin de communication lorsque le transistor (T) est ouvert pour la direction de communication respective, le dispositif de commande de ligne (LTV) étant conçu pour la communication bidirectionnelle avec d'autres dispositifs et le premier transistor étant utilisé pour un premier sens de communication sur le premier chemin de communication et le deuxième transistor étant utilisé pour un deuxième sens de communication sur le premier chemin de communication, la commande du transistor pouvant être effectuée au moyen d'une tension électrique appliquée ou d'un courant électrique, la commande du transistor agissant comme un circuit et sélectionnant le premier ou le deuxième chemin de communication.

2. Système selon la revendication 1, **caractérisé en ce que** la troisième unité d'interface (C) est conçue pour communiquer avec des unités d'exécution (AE) pouvant être connectées en série.

3. Système selon l'une des revendications précédentes, **caractérisé en ce que** la troisième unité d'interface (C) est précédée d'une unité logique (LE) sur le deuxième chemin de communication.

4. Agencement de système selon la revendication 3, **caractérisé en ce que** l'unité logique (LE) commande la deuxième unité d'interface (B) et/ou la troisième unité d'interface (C).

5. Agencement de système selon l'une des revendications précédentes, **caractérisé en ce que** le transistor (T) se présente sous la forme d'un transistor à effet de champ.

6. Agencement de système selon la revendication 5, **caractérisé en ce que** le transistor (T) se présente sous la forme d'un transistor à effet de champ autoconducteur.

7. Agencement de système selon l'une des revendications précédentes, **caractérisé en ce que**, lorsque le dispositif de commande de ligne (LTV) est inactif, le premier chemin de communication est réglé de telle sorte que les signaux qui sont appliqués à la première unité d'interface (A) doivent être délivrés sans traitement à la deuxième unité d'interface (B).

8. Système selon l'une des revendications précédentes, **caractérisé en ce que** le deuxième chemin de communication est un chemin de communication actif.

9. Agencement de système selon l'une des revendications précédentes, **caractérisé en ce que** le dispositif de commande de ligne (LTV) est formé d'une seule pièce.

10. Agencement de système selon l'une quelconque des revendications précédentes, l'agencement de système étant destiné à être utilisé dans une automobile.

11. Automobile comprenant un ensemble système selon la revendication 10.

12. Procédé de contrôle de flux de données efficace et tolérant aux pannes dans une automobile, comprenant :
- Fournir (100) une première unité d'interface (A) adaptée pour communiquer avec une unité de commande ou un premier dispositif de commande de ligne supplémentaire (LTV) ;
- Fournir (101) une seconde unité d'interface (B) adaptée pour communiquer avec un second dispositif de commande de ligne supplémentaire (LTV) ;
- fournir (102) une troisième unité d'interface (C) agencée pour communiquer avec une pluralité d'unités d'exécution (AE), un premier chemin de communication étant agencé (103) entre la première unité d'interface (A) et la deuxième unité d'interface (B), et un deuxième chemin de communication étant agencé (104) entre la première unité d'interface (A), la deuxième unité d'interface (B) et la troisième unité d'interface (C), **caractérisé en ce qu'**un premier et un deuxième transistor (T) sont disposés sur le premier chemin de communication (105) et, au moyen d'une commande de transistor, le flux de données est dévié (106) via le premier chemin de communication lorsque le transistor (T) est fermé pour une direction de communication respective ou via le deuxième chemin de communication lorsque le transistor (T) est ouvert sur pour une direction de communication respective, dans lequel le dispositif de commande de ligne (LTV) est conçu pour une communication bidirectionnelle avec d'autres dispositifs et le premier transistor est utilisé pour un premier sens de communication sur le premier chemin de communication et le deuxième transistor est utilisé pour un deuxième sens de communication sur le premier chemin de communication, dans lequel la commande de transistor est effectuée au moyen d'une tension électrique appliquée ou d'un courant électrique, la commande de transistor agissant comme un circuit et sélectionnant le premier ou le deuxième chemin de communication.

13. Produit programme d'ordinateur comprenant des instructions de commande qui, lorsqu'elles sont exécutées sur un ordinateur, exécutent le procédé selon la revendication 12.
